# EUROPEAN PATENT SPECIFICATION

(11) **EP 3 557 738 B1**
(45) Date of publication and mention of the grant of the patent: **26.08.2020**
(21) Application number: 19160114.5
(22) Date of filing: 28.02.2019
(51) Int. Cl.: H02K 49/10, A47J 36/24

(54) **MAGNETIC TRANSMISSION SYSTEM, WITH ASSOCIATED MAGNETIC DRIVE DEVICE AND BEVERAGE HEATING DEVICE EMPLOYING SUCH**
MAGNETISCHES ÜBERTRAGUNGSSYSTEM MIT ZUGEHÖRIGER MAGNETISCHER ANTRIEBSVORRICHTUNG UND GETRÄNKEERWÄRMUNGSVORRICHTUNG DAMIT
SYSTÈME DE TRANSMISSION MAGNÉTIQUE COMPRENANT UN DISPOSITIF D'ENTRAINEMENT MAGNÉTIQUE ASSOCIÉ ET DISPOSITIF DE CHAUFFAGE DE BOISSONS L'UTILISANT

(30) Priority: 19.04.2018 CN 201810352782
(43) Date of publication of application: 23.10.2019
(73) Proprietor: Huiyang Allan Plastic & Electric Industries Co., Limited, Huizhou City, Guangdong 516035 (CN)
(72) Inventor: Cheung, Shu Sang, Huizhou City, Guangdong (CN); Pang, To Yin, Huizhou City, Guangdong (CN)
(74) Representative: Murphy, David John

(56) References cited:
- DE-C- 945 183
- JP-B2- 4 232 670
- US-A1- 2013 123 026

## Description

### Technical Field

The invention belongs to the technical field of electronic products, and specifically relates a magnetic transmission mechanism. The invention also relates to a device, such as a beverage heating device, that employs the magnetic transmission mechanism.

### Background

When feeding babies, a milk bottle is often used to hold milk and dispense it to a child. Such milk bottles are a common parenting tool in the family. Typically babies are fed with warm milk from the bottle. Therefore the milk in the bottle needs to be heated to be suitable for infants. This warming process can be carried out using any suitable heating device. In existing milk heating devices, the heating process involves first heating water, then placing the milk bottle in the hot water so that liquid (i.e. milk) in the bottle is heated by the heated water. It is noted that the heat transfer efficiency low in this approach and is therefore slow to warm the milk.

It is noted that some milk heating devices are equipped with a motor for driving an inner cylinder that holds a milk bottle so that it can be rotated during heating to shorten time it takes to warm the milk and thereby improve the milk heating efficiency. A rigid connection, such as a gear, is typically made between the inner cylinder and its driving motor. As a result, if, during the operation of the milk heating device, a user mistakenly operates or touches the high-speed running inner cylinder, the inner cylinder can scratch the user, which presents a safety hazard.

Therefore, in view of the deficiencies in the existing milk heating devices, it is advantageous to develop a milk heating device with high safety and practical use, automatic stop without hurting the operator when touching the inner cylinder to improve work performance and safety performance, and reduce the safety hazards of the milk heating devices.

DE 945183 relates to a food mixer with a magnetic transmission system.

JP 4 232670 B2 relates to a beverage heating device.

### Summary of the Invention

In view of the above identified problems of the prior art, the present invention provides a beverage heating device comprising a magnetic transmission mechanism, suitable for use in a magnetic drive device for a beverage heating device, such as a milk heating device. The magnetic transmission system of the present invention provides for increased safety and high practicability by allowing a user to instantaneously touch and stop the device without turning of its power.

The present invention provides a beverage heating device in accordance with claim 1, such as a milk heating device, that employs a magnetic drive device.

Preferably, the main drive assembly is a circular or annular structure, and the main drive assembly is provided with a plurality of first driving member holders for mounting and fixing the first driving members. Further preferably the plurality of first driving member holders are spaced at equal intervals around the inner face of the sidewall of the main drive assembly.

Preferably, each of the plurality of first driving members are spaced at equal intervals on the main drive assembly, and fixed in the first driving member holder; the number of the first driving member holders is greater than or equal to that of the first driving members, and the number of the first driving members is two or more.

Preferably, the driven assembly is a circular or annular structure, and the driven assembly is provided with a plurality of second driving member holders for mounting and fixing the second driving members. Further preferably the plurality of second driving member holders are spaced at equal intervals on the outer wall of the driven assembly.

Preferably, each of the plurality of second driving members are spaced at equal intervals on the driven assembly, and fixed in the second driving member holders; the number of the second driving member holders is greater than or equal to that of the second driving members, and the number of the second driving members is two or more, and more preferably six. The main drive assembly drives the driven assembly to rotate cyclically around the center of the main drive assembly by a force generated by the magnetic attraction or the magnetic repulsion between the first driving members and the second driving members.

The base of the magnetic drive device is provided with a fixed cylindrical portion that is preferably upwardly convex and annular. The main drive assembly is disposed at an outer wall of the fixed cylindrical portion and connected to the drive assembly; the driven assembly is disposed inside the fixed cylindrical portion.

The drive means drives the main drive assembly to rotate in the outer wall of the fixed portion cyclically. When the main drive assembly is cyclically rotating in the outer wall of the fixed portion, the second drive assembly is driven to cyclically rotate around the central pivot in relative to the center of the fixed portion by a force generated by the magnetic attraction or the magnetic repulsion between the first driving member and the second driving member.

Preferably the drive means, which may be a motor, and the main drive assembly are connected by a belt or a gear.

Preferably, the position of the driven assembly disposed on the bottle holder corresponds to the position of the main drive assembly disposed on the fixed cylindrical portion.

Preferably, the central pivot point is provided as a central pivot on the central position of the closed end of the fixed cylindrical portion. The central pivot is convex upward and matches the bottle holder.

Preferably, the heating device is disposed on the closed end of the fixed cylindrical portion.

Preferably the bottle holder is provided with a plurality of steam vents. Further preferably, the plurality of steam vents are spaced at equal intervals on the side wall of the bottle holder.

Preferably, a circuit board disposed on the base and a display coupled to the circuit board are included; the circuit board is coupled to the heating device and the drive means respectively.

Compared with the prior art, the magnetic transmission system and associated device of the present invention replace the rigid connection and transmission mechanism of the prior art so that there is no direct connection between the main drive assembly and the driven means. The main drive assembly drives the driven assembly to rotate by way of the magnetic attraction or repulsive manner to realize the transmission between the main drive assembly and the driven assembly.

Since there is no direct connection between the main drive assembly and the driven assembly, when the user touches the driven component, the driven assembly stops immediately. This avoids unnecessary damage to the user or the beverage heating device as a result of the user's contact, whether intentional or accidental, with the driven assembly.

The magnetic transmission system of the present invention provides the function of touch and stop for the driven assembly, which has high safety performance and strong practicability. Although the present invention describes a beverage heating device employing the magnetic transmission system, it is envisaged that the magnetic transmission system and magnetic drive device can be employed in a range of home appliances and electronic products such as milk heating devices and cutting machines. Appliances employing the magnetic transmission system of the present invention have greatly improved the safety performance for at least the above reasons.

In addition, when used to heat milk in particular the beverage heating device of the present invention has the advantages of high safety, strong practicability, high efficiency for heating milk, uniform heating of the milk bottle in the milk heating device, and touch and immediate stop. The magnetic drive assembly and device are applied in the milk heating device, having the advantages of ingenious design, strong practicability, low noise, high safety, and touch and immediate stop.

The driven assembly is located on the bottle holder and the main drive assembly is located on the main fixed cylindrical portion. When the drive assembly drives the main drive member to rotate, the attraction or repulsive force between the main drive assembly and the driven assembly drives the bottle holder to rotate in the main fixed portion body. When the user touches the milk bottle or the bottle holder, the bottle holder and the milk bottle stop rotating. When the user stops touching the milk bottle or the bottle holder, the bottle holder and the milk bottle resume rotating.

This enables the bottle holder or the milk bottle to stop when touched by a user, and re-commence rotating when it is not being touched by a user. Further, this prevents the user from being injured when the bottle holder or the milk bottle touched by the user does not stop operating, thereby improving the safety performance of the milk heating device, reducing the safety hazard, increasing the practicability of the product. Reducing the safety hazard, and increasing the safety performance.

A cylindrical heating steam chamber is formed between the closed end of the fixed cylindrical portion and the upper portion of the main body of the fixed cylindrical portion. During use, water is added to the steam heating chamber, and then the water is heated by the heating device to generate steam to heat the milk bottle.

As the milk bottle is being heated by the steam, the drive assembly drives the bottle holder to cyclically rotate in the fixed cylindrical portion with the central pivot as the shaft, thereby driving the milk in the milk bottle to flow.

This rotation during the heating of the milk bottle ensures that that the bottle is evenly heated and the temperature of the milk in the bottle is equalized, which improves the heating efficiency for the milk bottle. The rotation also helps mix the milk in the milk bottle, so that the milk is fully stirred and mixed, which improves the quality of the heated milk.

A belt drive or gear drive is adopted between the drive means and the outer annual seat such that the conversion efficiency of the kinetic energy is improved, the loss of kinetic energy is reduced, the transmission ratio of the kinetic energy is improved, the electric energy is saved, and the performance of the beverage heating device is improved.

The beverage heating device is provided with a display means to display information, such as the heating temperature in the milk bottle, which enables the user to monitor the state of the milk bottle. This improves the efficiency and also allows the milk or other beverage to be heated to whatever temperature the user requires. The overall performance of the beverage heating device, an in particular milk heating devices, is increased by the magnetic transmission system.

### Description of the Drawings

The present invention will now be described with reference to the preferred embodiments, wherein:
FIG. 1 is a perspective view of a preferred embodiment of the magnetic transmission system used in the present invention;
FIG. 2 is a top plan view of the magnetic transmission system used in the present invention;
Fig. 3 is a cross-sectional view taken along line A-A of FIG. 2;
FIG. 4 is a schematic view showing the structure of the main drive assembly of the magnetic transmission system used in the present invention;
FIG. 5 is a cross-sectional view of the main drive assembly;
FIG. 6 is a schematic view showing the structure of the driven assembly of the magnetic transmission system used in the present invention;
FIG. 7 is a schematic view showing a first preferred embodiment of the magnetic drive device used in the present invention.
FIG. 8 is a schematic view showing a second preferred embodiment of the magnetic drive device used in the present invention.
FIG. 9 is a schematic view showing the preferred embodiment of a milk heating device in accordance with the present invention.
FIG. 10 is a cross-sectional view of the milk heating device of the present invention.
FIG. 11 is an exploded view of the milk heating device of the present invention.
Wherein: 1 main drive assembly; 11 first driving member; 12 first driving member holder; 2 driven assembly; 21 second driving member; 22 second driving member holder; 3 base; 31 fixed cylindrical portion; 311 main body of fixed cylindrical portion; 312 closed end of fixed cylindrical portion; 3121 central pivot; 4 drive means; 5 bottle holder; 51 steam vent; 6 heating device.

### Detailed Description of Embodiments

In order to make those skilled in the art better understand the technical solutions of the present invention, the present invention will be further described below in conjunction with the accompanying drawings.

### EMBODIMENT I

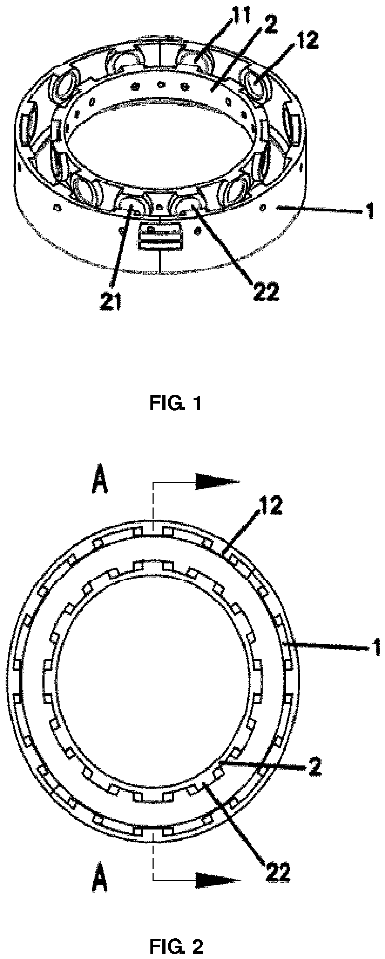

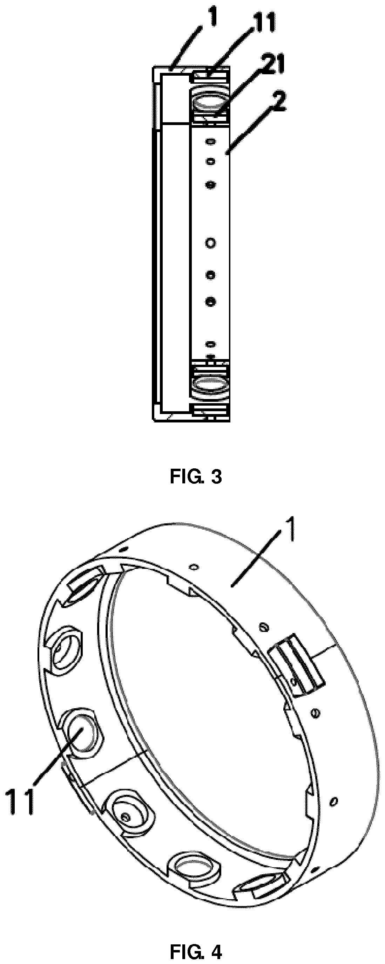

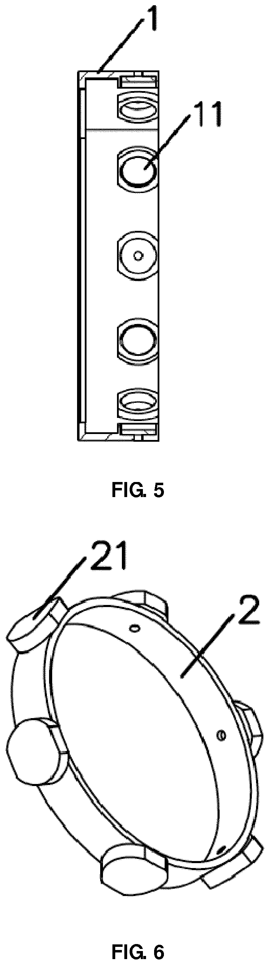

This embodiment provides a magnetic transmission system, as shown in FIG. 1 to 6.

As shown in FIG. 1 to 6, the magnetic transmission system comprises the main drive assembly 1 and the driven assembly 2 concentric with the main drive assembly 1 and located within the main drive assembly 1.

The main drive assembly 1 is an annular/circular structure. A plurality of first driving member holders 12 is disposed on the main drive assembly. The plurality of first driving member holders 12 are spaced at equal intervals on the inner wall of the main drive assembly. Wherein the number of the first driving member holders 12 is two or more. A plurality of first driving members 11 is disposed on the side wall of the main drive assembly 1. The first driving members 11 are mounted and fixed in the first driving member holder 12. Wherein the number of the first driving members 11 is smaller than or equals to the number of the first driving member holders 12, and the number of the first driving members 11 is two or more. Each of the plurality of the first driving members 11 mounted in the first driving member holders 12 are spaced at equal intervals on the main drive assembly 1. The shapes and the sizes of the first driving member holders 12 match with the shapes and the sizes of the first driving members 11.

The driven assembly 2 is an annular/circular structure. The driven assembly 2 is provided with a plurality of second driving member holders 22, wherein the number of the second driving member holders 22 is two or more. The plurality of the second driving member holders 22 are spaced at equal intervals on the outer wall of the driven assembly 2. A plurality of second driving members 21 are provided on the side wall of the driven assembly 2. The second driving members 21 are mounted and fixed in the second driving member holders 22. The number of the second driving members 21 is smaller than or equal to that of the second driving member holders 22, and the number of the second driving members is two or more. The number of the second driving members 21 is two or more, but preferably six. The plurality of second driving members 21 mounted in the second driving member holders 22 is spaced at equal intervals on the driven assembly 2. The shapes and the sizes of the second driving member holders 22 match with the shapes and the sizes of the second driving members 21.

In the first embodiment both the first driving members 11 and the second driving members are magnets having magnetic properties. The magnetic poles of the first driving members 11 and the magnetic poles of the second driving members 21 are aligned to attract with each other. That is, the magnetic poles of the first driving members 11 are the south poles and the magnetic poles of the second driving members 21 relative to the position of the first driving members 11 are the north poles. Alternatively the magnetic poles of the first driving members 11 are the north poles, and the magnetic poles of the second driving members 21 relative to the position of the first driving member 11 are the south poles.

When the main drive assembly 1 rotates, the main drive assembly 1 drives the driven assembly to circulate around the central axial in the center of the main drive assembly 1 by the force generated by the magnetic attraction between the first driving member 11 and the second driving member 21. Wherein, the magnet body is a magnet.

Since the magnetic drive assembly is driven by way of magnetic attraction, the rigid connection structure of the drive is eliminated. As a consequence, when the user touches the driven assembly, the driven assembly stops immediately, effectively avoiding unnecessary damage to the user during the user's contact with the driven assembly, and realizing the function of touch and stop for the driven assembly. It has high safety performance and strong practicability.

### EMBODIMENT II

This embodiment provides a similar magnetic transmission system to the first embodiment shown in FIG. 1 to 6. The structure of the magnetic transmission system of this embodiment is substantially the same as that of Embodiment I, and the same points will not be described in detail herein.

The difference between this second embodiment and Embodiment I is that, although the first driving members 11 and the second driving members 21 both use a magnetic body with magnetic properties, the magnetic poles of the first driving members 11 and the magnetic poles of the second driving members 21 are aligned to repel each other. That is, the magnetic poles of the first driving members 11 are the south poles, and the magnetic poles of the second driving members 21 relative to the position of the first driving members 11 are the south poles. Alternatively the magnetic poles of the first driving members 11 are the north poles, and the magnetic poles of the second driving members 21 relative to the position of the first driving members 11 are the north poles.

When the main drive assembly 1 rotates, the main drive assembly 1 drives the driven assembly to circulate around the central axial in the center of the main drive assembly 1 by the force generated by the magnetic repulsion between the first driving member 11 and the second driving member 21. Wherein, the magnet body is a magnet.

Since the magnetic drive assembly is driven by way of magnetic repulsion, the rigid connection structure of the drive is eliminated. As a consequence, when the user touches the driven assembly, the driven assembly stops immediately, effectively avoiding unnecessary damage to the user during the user's accidental contact with the driven assembly, and realizing the function of touch and stop for the driven assembly. It has high safety performance and strong practicability.

At the same time, the magnetic rotating structure can be applied to home appliances and electronic products such as milk heating devices and cutting machines such that the function of touch and stop may be realized for home appliances and electronic products such as milk heating devices and cutting machines, greatly improving the safety performance of home appliances and electronic products such as milk heating devices.

### EMBODIMENT III

This embodiment provides a similar magnetic transmission system to the first and second embodiments shown in FIG. 1 to 6. The structure of the magnetic transmission system of this embodiment is substantially the same as that of Embodiments I and II, and the same points will not be described in detail herein.

The difference between this third embodiment and Embodiment I and II is that in this embodiment the first driving members 11 adopt a magnet having magnetic properties, and the second driving members 21 adopt metal iron, so that the main drive assembly 1 can drive the driven assembly to rotate by the attractive force of the magnetic attraction between the first driving members and the second driving members 21.

When the main drive assembly 1 rotates, the main drive assembly 1 drives the driven assembly to circulate around the central axial in the center of the main drive assembly 1 by the force generated by the magnetic attraction between the first driving members 11 and the second driving members 21. Wherein, the magnet body is a magnet.

In addition to the metal iron in this embodiment, the second driving member 21 may be a metal such as nickel that generates a magnetic field with a magnet.

Once again, since the magnetic drive assembly is driven by way of magnetic attraction, the rigid connection structure of the drive is eliminated. As a consequence, when the user touches the driven assembly, the driven assembly stops immediately, effectively avoiding unnecessary damage to the user during the user's accidental contact with the driven assembly, and realizing the function of touch and stop for the driven assembly. It has high safety performance and strong practicability.

At the same time, the magnetic rotating structure can be applied to home appliances and electronic products such as milk heating devices and cutting machines such that the function of touch and stop may be realized for home appliances and electronic products such as milk heating devices and cutting machines, greatly improving the safety performance of home appliances and electronic products such as milk heating devices.

### EMBODIMENT IV

This embodiment provides a similar magnetic transmission system to the above described embodiments shown in FIGS. 1 to 6. The structure of the magnetic transmission system of this embodiment is substantially the same as that of Embodiments I and II, and the same points will not be described in detail herein.

The difference between this embodiment and Embodiment I is that in this embodiment the first driving members 11 adopt metal iron, and the second driving members 21 adopt a magnet having magnetic properties, so that the main drive assembly 1 can drive the driven assembly to rotate by the suction force of the magnetic attraction between the first driving members and the second driving members 21. When the main drive assembly 1 rotates, the main drive assembly 1 drives the driven assembly to circulate around the central axial in the center of the main drive assembly 1 by the force generated by the magnetic attraction between the first driving member 11 and the second driving member 21. Wherein, the magnet body is a magnet.

In addition to the metal iron in this embodiment, the first driving member 11 may be a metal such as nickel that generates a magnetic field with a magnet.

### EMBODIMENT V

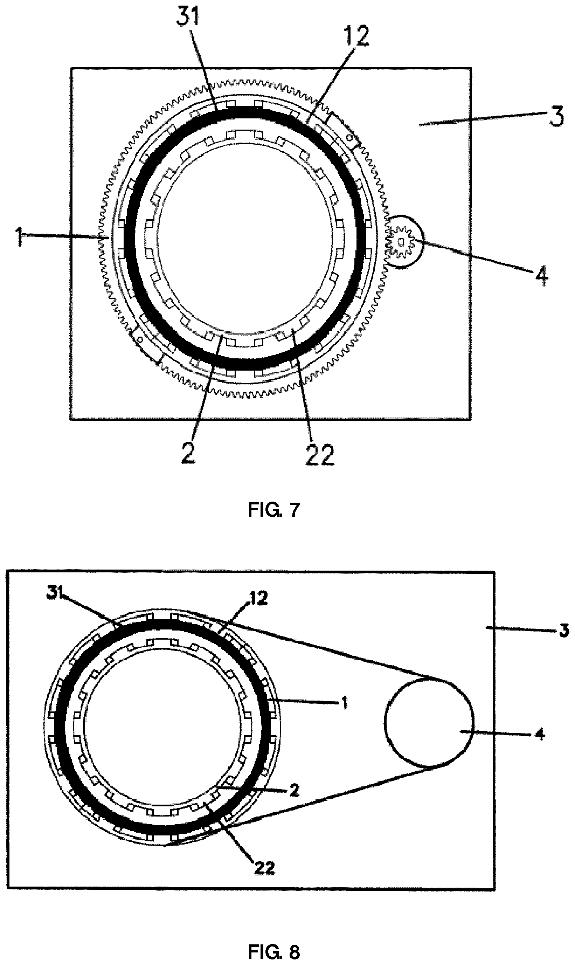

This embodiment provides a magnetic drive device, as shown in FIG. 1 to 7.

As shown in FIG. 1 to 6, the magnetic drive device comprises a base 3, a drive assembly 4 disposed on the base 3 and the magnetic transmission system as described in Embodiments I to VI.

The outer side wall of the main drive assembly 1 of the magnetic transmission system is provided with tooth grooves. The base 3 is provided with an upwardly convex and annular fixed portion 31. The main drive assembly 1 is disposed at an outer wall of the fixed cylindrical portion 31.

The driven assembly 2 is disposed inside the fixed cylindrical portion 31. The drive means 4 is a motor. The output end of the motor is connected to the main drive assembly 1 by a gear. When the motor is in operation, the main drive assembly 1 is circulated and rotated by the gear on the outer wall of the fixed cylindrical portion 31.

When the main drive assembly 1 cyclically rotates on the outer wall of the fixed cylindrical portion 31, the main drive assembly 1 drives the driven assembly 2 to cyclically rotate around the central axial in the center of the fixed cylindrical portion 31 by the force generated by the magnetic attraction or magnetic repulsive forces between the first driving members 11 and the second driving members 21.

Because the magnetic drive device is driven by magnetic attraction or magnetic repulsion, the rigid connection structure of the drive is removed. Therefore, when the user touches the driven assembly, the driven assembly stops immediately, effectively avoiding unnecessary damage to the user during the user's accidental contact with the driven assembly, and realizing the function of touch and stop for the driven assembly.

It has high safety performance and strong practicability. At the same time, the magnetic rotating structure can be applied to home appliances and electronic products such as milk heating devices and cutting machines such that the function of touch and stop may be realized for home appliances and electronic products such as milk heating devices and cutting machines, greatly improving the safety performance of home appliances and electronic products such as milk heating devices.

### EMBODIMENT VI

This embodiment further provides another magnetic drive device, as shown in FIG. 1 to 6 and FIG. 8.

As shown in FIG. 1 to 6 and FIG. 8, the magnetic drive device comprises a base 3, a drive assembly 4 disposed on the base 3 and the magnetic transmission system as mentioned in Embodiment I to IV.

The base 3 is provided with an upwardly convex and annular fixed portion 31. The main drive assembly 1 is disposed at an outer wall of the fixed cylindrical portion 31. The driven assembly 2 is disposed inside the fixed cylindrical portion 31. The drive means 4 is once again a motor. The output end of the motor is connected to the main drive assembly 1 by a belt. When the motor is in operation, the main drive assembly 1 is circulated and rotated by the belt on the outer wall of the fixed cylindrical portion 31.

When the main drive assembly 1 cyclically rotates on the outer wall of the fixed cylindrical portion 31, the main drive assembly 1 drives the driven assembly 2 to cyclically rotate around the central axial in the center of the fixed cylindrical portion 31 by the force generated by the magnetic attraction or magnetic repulsive force between the first driving members 11 and the second driving members 21.

Once again, because the magnetic drive device is driven by magnetic attraction or magnetic repulsion, the rigid connection structure of the drive is eliminated. Therefore, when the user touches the driven assembly, the driven assembly stops immediately, effectively avoiding unnecessary damage to the user during the user's accidental contact with the driven assembly, and realizing the function of touch and stop for the driven assembly.

It has high safety performance and strong practicability. At the same time, the magnetic rotating structure can be applied to home appliances and electronic products such as milk heating devices and cutting machines such that the function of touch and stop may be realized for home appliances and electronic products such as milk heating devices and cutting machines, greatly improving the safety performance of home appliances and electronic products such as milk heating devices.

### EMBODIMENT VII

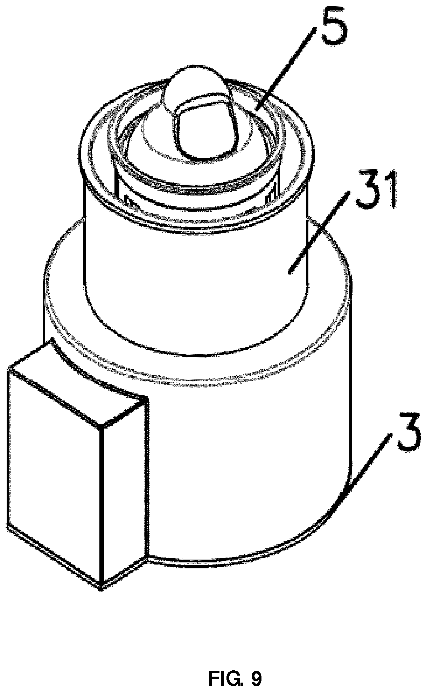

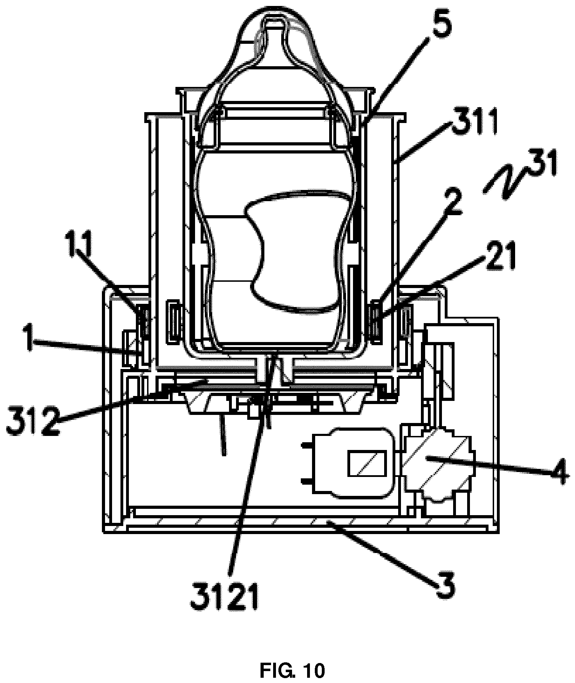

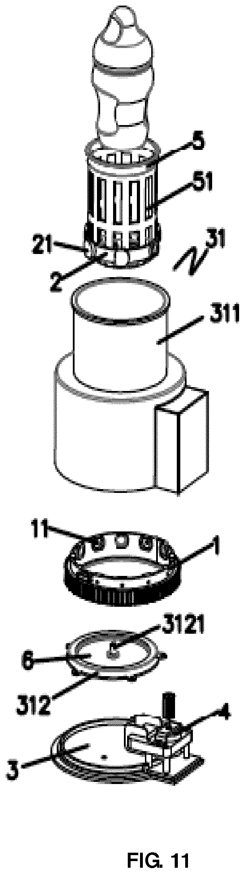

This embodiment according to the herein claimed invention further provides a beverage heating device, and in particular a milk heating device. The device, which employs the magnetic drive device of Embodiment V, is shown in FIG. 9 to 11.

As shown in the drawings, the milk heating device comprises a bottle holder 5 with a cylindrical structure in which a bottle placement chamber is provided, a heating device 6 for heating the milk bottle, and a magnetic drive device as described in Embodiment V. The specific structure of the magnetic drive device is described in detail in Embodiment V.

The bottle holder 5 and the heating device 6 are disposed in the fixed cylindrical portion 31 of the magnetic drive device. The fixed cylindrical portion 31 of the magnetic drive device comprises a main body 311 having a hollow structure and a closed end 312. The upper portion and the lower portion of the main body 311 are cylindrical structures. The outer diameter of the upper portion of the main body 311 is smaller than that of the lower portion of the main body 311, so that a stepped structure is formed between the upper portion of the main body 311 and the lower portion of the main body 311.

The closed end of the fixed cylindrical portion 312 is located at the lower portion of the main body 311 to form a steam heating chamber in the cylindrical structure. A central pivot 3121, which is complementary in shape to the bottle holder 5, protrudes upward from a center position of the closed end of the fixed cylindrical portion 312.

The bottle holder 5 can be positioned on the central pivot 3121 and is supported by the central pivot 3121 such that the bottle holder 5 cyclically rotates in the steam heating chamber with the central pivot 3121 as a rotating axis.

The drive assembly 4 is connected to the main drive assembly 1. The drive assembly 4 and the main drive assembly 1 are driven by the gear such that the accuracy and efficiency for driving is improved, with the advantages of compact structure, reliable operation and long service life for the drive means 4 and the main drive assembly 1. Wherein, the drive assembly 4 is a motor. The motor drives the main drive assembly to cyclically rotate on the main body of the fixed cylindrical portion 311 by the power gear engaging with the main drive assembly.

The heating device 6 is disposed at the bottom of the steam heating chamber of the fixed portion 31. The clean water placed in the steam heating chamber inside the fixed portion 31 is heated by the heating device 6 such that steam is generated from the water to heat the milk bottle located in the bottle holder 5 of the steam heating chamber of the fixed cylindrical portion 31.

The bottle holder 5 is located in the steam heating chamber inside the fixed cylindrical portion 31. The bottle holder is a cylindrical structure. The upper end of the bottle holder is open, and the inside of the bottle holder is provided with a milk bottle placement chamber in which the milk bottle is received. The milk bottle is inserted into the milk bottle placement chamber of the bottle holder from the upper end of the bottle holder and is then heated by steam.

The driven assembly is disposed at a lower portion of the bottle holder 5. The position of the driven assembly 2 corresponds to the position of the main drive assembly 1. That is, the position of the driven assembly 2 disposed on the bottle holder aligns with the position of the main drive assembly disposed on the fixed cylindrical portion 31, so that the driven assembly 2 is capable of interacting with the main drive assembly 1.

The attractive force generated by the magnetic attraction or the repulsive force generated by the magnetic repulsion between the driven assembly 2 disposed outside the bottle holder and the drive assembly 1 disposed outside the main body 311 drives the bottle holder to rotate in the fixed cylindrical portion 31.

Preferably the number of the first driving members 11 provided on the main drive assembly 1 and the number of the second driving members 21 provided on the driven assembly 2 are both two or more. Further preferably, the number of the first driving members 11 provided on the main drive assembly 1 and the number of the second driving members 21 disposed on the driven member 2 is six to have optimal effects.

The heating device 6 is a circular heating plate. The heating plate is laid on the upper end surface of the closed end of the fixed cylindrical portion 312. Fresh water placed in the steam heating chamber is then heated by the heating plate to generate water steam, which can heat the milk bottle placed in the bottle holder. It is envisioned that this steam could be used to heat other types of beverages and, as such, the invention is not considered to be limited to just milk.

The use of steam to heat the milk bottle can improve heating efficiency, while also reduces the water loss in the milk bottle to ensure the quality of the milk solution in the milk bottle during heating. The skilled person will appreciate that heating plate can be realized by using any suitable hot plate without departing from the present invention.

The bottle holder 5 is provided with a positioning recess or hole and a plurality of steam vents 51. The positioning recess or hole is disposed at a central position of the bottom of the bottle holder. The shape and the size of the positioning recess or hole corresponds to the shape and the size of the central pivot. In this way, when the bottle holder is placed in the steam heating chamber in the fixed cylindrical portion 31, the positioning recess/hole of the bottle holder acts on the center shaft.

The drive means 4 drives the main drive assembly to rotate. When the main drive assembly rotates, the main drive assembly drives the driven assembly to rotate by magnetic attraction or magnetic repulsion of the first driving members disposed on the main drive assembly and the second driving members disposed on the driven assembly.

When the driven assembly rotates, the bottle holder is driven to cyclically rotate on the central pivot as a rotating shaft in the steam heating chamber in the fixed cylindrical portion 31, thereby driving the milk bottle placed in the bottle holder to cyclically rotate. The bottle holder is driven to cyclically rotate in the steam heating chamber in the housing by using the magnetic attraction or magnetic repulsion of the first driving members disposed on the main drive assembly and the second driving members disposed on the driven assembly.

The drive structure of milk heating device is therefore changed from that of the traditional milk heating devices, effectively improving the safety performance of the milk heating device. When the user touches the milk bottle or the bottle holder, the bottle holder and the milk bottle stop rotating. When the user does not touch the milk bottle or the bottle holder, the bottle holder and the milk bottle return rotating. This realizes that the bottle holder or the milk bottle stops when it comes into contact with the user, and re-rotates when it is not in contact with the user. This also prevents the user from being injured when the bottle holder or the milk bottle touched by the user does not stop operating, thereby improving the safety performance of the milk heating device, reducing the safety hazard and increasing the practicability of the product.

The plurality of steam vents 51 are evenly spaced at the side wall of the bottle holder. The steam generated in the steam heating chamber enters the bottle holder through the steam vents 51, thereby heating the milk bottle placed in the bottle holder, shortening the time for heating the milk bottle. This increases the heating efficiency for the milk bottle. The shape of the steam vents 51 may be a rectangle, a circle, a diamond, an ellipse or the like. The number of the steam vents 51 is preferably greater than two.

The main drive assembly 1 is disposed outside the main fixed portion body 311. The motor drives the main drive assembly to cyclically rotate on the main body of the fixed cylindrical portion 31 by the power gear engaging with the main body 311. When the main drive assembly rotates cyclically, the bottle holder is driven to cyclically rotate in the steam heating chamber.

Due to the gear drive between the motor and the main drive assembly, the conversion efficiency of the kinetic energy is improved, the loss of kinetic energy is reduced, the transmission ratio of the kinetic energy is improved, the electric energy is saved, and the performance of the milk heating device is improved.

All beverage heating devices according to the present invention, including milk heating devices, may further include a circuit board disposed on the base and a display connected to the circuit board. The circuit board is respectively connected with the heating device and the motor in the drive assembly. The control buttons on the circuit board controls the heating device and the motor in the drive assembly, and the display displays the heating temperature, the working state and other parameters to improve the level of operation. For instance, the control circuit and the display can be implemented by using the control circuit and the display in the existing milk heating device.

The operation of the milk heating embodiment of the beverage heating device of the present invention will now be described. The user first adds water to the steam heating chamber of the device, and then places the milk bottle from the top opening of the bottle holder into the bottle holder. The dimensions of the device are such that a relatively closed space for heating the milk bottle is formed between the milk bottle and the milk bottle placement chamber in the bottle holder and the steam heating chamber in the housing.

The operating heating parameters are set through the control buttons on a control board. The heating plate is activated to heat the water in the steam heating chamber. The steam generated circulates in the bottle housing, the bottle placement chamber in the bottle holder, and the steam heating chamber in the housing, thereby heating the bottle with water steam.

The motor works while heating the bottle with steam. When the motor is in operation, the main drive assembly is driven to rotate on the fixed cylindrical portion by the engagement of the power gear and the main drive assembly. When the main drive assembly rotates, the bottle holder is driven to cyclically rotate using the central pivot as the rotating shaft by the magnetic force between the first driving members disposed on the main drive assembly and the second driving member disposed on the driven assembly such that the milk in the milk bottle can be fully mixed and the milk bottle is continuously heated by the steam.

This rotational movement ensures that the bottle is evenly heated and the temperature of the milk in the bottle is equalized during the heating process of the bottle, which improves the heating efficiency for the milk bottle.

This rotational movement also ensures that the mixing of the milk in the milk bottle may accelerate, so that the milk is fully stirred and mixed.

At the same time, the use of steam to heat the milk bottle can effectively avoid the loss of water in the milk solution in the milk bottle, improve the quality of the milk after heating, and improve the performance of the milk heating device.

Further, the bottle holder is driven to cyclically rotate in the steam heating chamber in the fixed cylindrical portion by using the magnetic attraction or magnetic repulsion of the first driving members disposed on the main drive assembly and the second driving members disposed on the driven assembly. The rigid drive structure of the traditional milk heating device is eliminated, and the contactless drive between the main drive assembly and the driven assembly is realized.

This contactless transmission of drive power improves the safety performance of the milk heating device. Specifically, when the user touches the milk bottle or the bottle holder, the bottle holder and the milk bottle stop rotating. When the user stops touching the milk bottle or the bottle holder, the bottle holder and the milk bottle can return to rotating. This ensures that the bottle holder or the milk bottle stops when it comes into contact with the user, and re-rotates when it is not in contact with the user. This function prevents the user from being injured when they touch the bottle holder or the milk bottle when the device is in operation. This improves the safety performance of the milk heating device specifically, and other beverage heating devices more generally, reducing the safety hazard and increasing the practicability of the product.

In addition to the gear drive between the above-mentioned drive assembly and the main drive assembly, the structure of the milk heating device of the present invention can alternatively adopt a belt drive. The belt drive structure is similar to that of Embodiment VI, and will not be described again in detail.

The above embodiments are only specific implementations of the present invention, and the description thereof is more specific and detailed, but is not to be construed as limiting the scope of the invention. It should be noted that a number of variations and modifications may be made by those skilled in the art without departing from the scope of the invention, which is defined by the claims.

## Claims

1. A beverage, preferably milk, heating device comprising:
a bottle holder (5) with a cylindrical structure in which a bottle placement chamber is provided; and
a magnetic drive device comprising a base (3) having a fixed cylindrical portion (31), a drive means (4) disposed on the base; and a magnetic transmission system that comprises a main drive assembly (1) and a driven assembly (2) located within and concentric to the main drive assembly (1);
wherein the fixed cylindrical portion (31) comprises a main body (311) having a hollow structure with a closed end (312) located at the lower portion of the main body (311) to define a steam heating chamber in which the bottle holder (5) is disposed;
wherein the main drive assembly (1) has a side wall with a plurality of first driving members (11) disposed thereon, the driven assembly (2) has a side wall with a plurality of second driving members (21) disposed thereon, and the first driving members (11) and/or the second driving members (21) are magnets having magnetic properties;
wherein the driven assembly (2), which is disposed inside the fixed cylindrical portion (31), is fixed on the bottle holder (5), and the main drive assembly (1) is disposed outside the fixed cylindrical portion (31) on the main body (311); and
whereby the rotation of the main drive assembly (1) around the outer wall of the fixed cylindrical portion (31) causes the driven assembly (2) to rotate around a central pivot point, which is located co-axial with the main driving assembly (1) and the fixed cylindrical portion (31), by a force generated by the magnetic attraction or the magnetic repulsion between the first driving members (11) and the second driving members (21);
whereby the main drive assembly (1) is driven to cyclically rotate on the main body (311) by the drive means (4) such that, by the cooperation of the main drive assembly (1) and the driven assembly (2), the drive means (4) drives the bottle holder (5) to cyclically rotate in the steam heating chamber; and
wherein the device further comprises a heating device (6) for heating a bottle received in the bottle holder, said heating device (6) being disposed in the steam heating chamber.

2. The device according to Claim 1, which is **characterized in that** the main drive assembly (1) is an annular structure provided with a plurality of first driving member holders (12) that receive the first driving members (11); and
wherein, preferably, the first driving member holders (12) are spaced at equal intervals on an inner face of the sidewall of the main drive assembly (1).

3. The device according to Claim 2, which is **characterized in that** the number of the first driving member holders (12) is greater than or equal to that of the first driving members (11), which is two or more first driving members (11).

4. The device according to Claim 2 or 3, which is **characterized in that** the driven assembly (2) is a circular structure provided with a plurality of second driving member holders (22) that receive the second driving members (21); and
wherein, preferably, the second driving member holders (22) are spaced at equal intervals on an outer face of the sidewall of the driven assembly (2).

5. The device according to Claim 4, which is **characterized in that** the number of the second driving member holders (22) is greater than or equal to that of the second driving members (21), which is two or more, and preferably six, second driving members (21).

6. The device according to any of the preceding claims, which is **characterized in that** either said first driving members (11) or said second driving members comprise a metal that is capable of generating a magnetic field with a magnet, such as iron or nickel.

7. The magnetic drive device according to any of the preceding claims, which is **characterized in that** the drive means (4) and the main drive assembly (1) are connected by a belt or a gear; and
wherein, preferably, the drive means (4) is a motor.

8. The beverage heating device according to any of the preceding claims, which is **characterized in that** the position of the driven assembly (2) disposed on the bottle holder corresponds with the position of the main drive assembly (1) disposed on the fixed cylindrical portion (31).

9. The beverage heating device according to any of the preceding claims, which is **characterized in that** the central pivot point is provided as a central pivot (3121) on the central position of the closed end (312) of the fixed cylindrical portion (31); wherein the central pivot (3121) is convex upward and matches the bottle holder (5).

10. The beverage heating device according to any of the preceding claims, which is **characterized in that** the heating device (6) is disposed on the closed end (312) of the fixed cylindrical portion (31).

11. The beverage heating device according to any of the preceding claims, which is **characterized in that** the bottle holder (5) is provided with a plurality of steam vents (51); and
wherein, preferably, the steam vents (51) are spaced at equal intervals on the side wall of the bottle holder (5).

12. The beverage heating device according to any of the preceding claims, which is **characterized in that** the device further comprises a circuit board disposed on the base (3) and a display coupled to the circuit board; the circuit board is coupled to the heating device (6) and the drive means (4) respectively.

## Patentansprüche

1. Getränke-, bevorzugt Milch-, Erwärmungsvorrichtung, umfassend:
einen Flaschenhalter (5) mit einer zylindrischen Struktur, in welcher eine Flaschenaufnahmekammer bereitgestellt ist; und
eine magnetische Antriebsvorrichtung umfassend eine Basis (3) mit einem festen zylindrischen Abschnitt (31), ein auf der Basis angeordnetes Antriebsmittel (4); und ein magnetisches Übertragungssystem, das eine Hauptantriebsanordnung (1) und eine innerhalb und konzentrisch zu der Hauptantriebsanordnung (1) befindliche angetriebene Anordnung (2) umfasst;
wobei der feste zylindrische Abschnitt (31) einen Hauptkörper (311) mit einer hohlen Struktur mit einem geschlossenen Ende (312) mit Positionierung an dem unteren Abschnitt des Hauptkörpers (311) zum Definieren einer Dampferwärmungskammer, in welcher der Flaschenhalter (5) angeordnet ist, umfasst;
wobei die Hauptantriebsanordnung (1) eine Seitenwand mit einer Mehrzahl von darauf angeordneten ersten Antriebselementen (11) aufweist, die angetriebene Anordnung (2) eine Seitenwand mit einer Mehrzahl von darauf angeordneten zweiten Antriebselementen (21) aufweist und die ersten Antriebselemente (11) und/oder die zweiten Antriebselemente (21) Magnete mit magnetischen Eigenschaften sind;
wobei die angetriebene Anordnung (2), welche innen in dem festen zylindrischen Abschnitt (31) angeordnet ist, an dem Flaschenhalter (5) befestigt ist, und die Hauptantriebsanordnung (1) außerhalb des festen zylindrischen Abschnitts (31) auf dem Hauptkörper (311) angeordnet ist; und
wodurch die Drehung der Hauptantriebsanordnung (1) um die Außenwand des festen zylindrischen Abschnitts (31) bewirkt, dass sich die angetriebene Anordnung (2) um einen zentralen Drehpunkt, welcher koaxial zu der Hauptantriebsanordnung (1) und dem festen zylindrischen Abschnitt (31) befindlich ist, durch eine Kraft dreht, die von der magnetischen Anziehung oder der magnetischen Abstoßung zwischen den ersten Antriebselementen (11) und den zweiten Antriebselemente (21) erzeugt wird;
wodurch die Hauptantriebsanordnung (1) angetrieben wird, um sich zyklisch auf dem Hauptkörper (311) durch das Antriebsmittel (4) zu drehen, sodass, durch das Zusammenwirken der Hauptantriebsanordnung (1) und der angetriebenen Anordnung (2), das Antriebsmittel (4) den Flaschenhalter (5) so antreibt, dass er sich zyklisch in der Dampferwärmungskammer dreht; und
wobei die Vorrichtung ferner eine Erwärmungsvorrichtung (6) zum Erwärmen einer in dem Flaschenhalter aufgenommenen Flasche umfasst, wobei die Erwärmungsvorrichtung (6) in der Dampferwärmungskammer angeordnet ist.

2. Vorrichtung nach Anspruch 1, welche **dadurch gekennzeichnet ist, dass** die Hauptantriebsanordnung (1) eine ringförmige Struktur ist, die mit einer Mehrzahl von ersten Antriebselementhaltern (12) versehen ist, die die ersten Antriebselemente (11) aufnehmen; und
wobei, bevorzugt, die ersten Antriebselementhalter (12) mit gleichen Abständen auf einer Innenfläche der Seitenwand der Hauptantriebsanordnung (1) angeordnet sind.

3. Vorrichtung nach Anspruch 2, welche **dadurch gekennzeichnet ist, dass** die Anzahl der ersten Antriebselementhalter (12) größer oder gleich derjenigen der ersten Antriebselemente (11), wobei es sich um zwei oder mehr erste Antriebselemente (11) handelt, ist.

4. Vorrichtung nach Anspruch 2 oder 3, welche **dadurch gekennzeichnet ist, dass** die angetriebene Anordnung (2) eine kreisförmige Struktur ist, die mit einer Mehrzahl von zweiten Antriebselementhaltern (22), die die zweiten Antriebselemente (21) aufnehmen, versehen ist; und
wobei, bevorzugt, die zweiten Antriebselementhalter (22) mit gleichen Abständen auf einer Außenfläche der Seitenwand der angetriebenen Anordnung (2) angeordnet sind.

5. Vorrichtung nach Anspruch 4, welche **dadurch gekennzeichnet ist, dass** die Anzahl der zweiten Antriebselementhalter (22) größer oder gleich derjenigen der zweiten Antriebselemente (21), wobei es sich um zwei oder mehr, und bevorzugt sechs, zweite Antriebselemente (21) handelt, ist.

6. Vorrichtung nach einem der vorhergehenden Ansprüche, welche **dadurch gekennzeichnet ist, dass** entweder die ersten Antriebselemente (11) oder die zweiten Antriebselemente ein Metall, das fähig ist, ein Magnetfeld mit einem Magneten zu erzeugen, wie Eisen oder Nickel, umfassen.

7. Magnetische Antriebsvorrichtung nach einem der vorhergehenden Ansprüche, welche **dadurch gekennzeichnet ist, dass** das Antriebsmittel (4) und die Hauptantriebsanordnung (1) durch einen Riemen oder ein Zahnrad verbunden sind; und
wobei, bevorzugt, das Antriebsmittel (4) ein Motor ist.

8. Getränkeerwärmungsvorrichtung nach einem der vorhergehenden Ansprüche, welche **dadurch gekennzeichnet ist, dass** die Position der auf dem Flaschenhalter angeordneten angetriebenen Anordnung (2) der Position der auf dem festen zylindrischen Abschnitt (31) angeordneten Hauptantriebsanordnung (1) entspricht.

9. Getränkeerwärmungsvorrichtung nach einem der vorhergehenden Ansprüche, welche **dadurch gekennzeichnet ist, dass** der zentrale Drehpunkt als zentraler Drehpunkt (3121) auf der zentralen Position des geschlossenen Endes (312) des festen zylindrischen Abschnitts (31) bereitgestellt ist; wobei der zentrale Drehpunkt (3121) nach oben konvex ist und mit dem Flaschenhalter (5) übereinstimmt.

10. Getränkeerwärmungsvorrichtung nach einem der vorhergehenden Ansprüche, welche **dadurch gekennzeichnet ist, dass** die Erwärmungsvorrichtung (6) auf dem geschlossenen Ende (312) des festen zylindrischen Abschnitts (31) angeordnet ist.

11. Getränkeerwärmungsvorrichtung nach einem der vorhergehenden Ansprüche, welche **dadurch gekennzeichnet ist, dass** der Flaschenhalter (5) mit einer Mehrzahl von Dampföffnungen (51) versehen ist; und
wobei, bevorzugt, die Dampföffnungen (51) in gleichen Abständen auf der Seitenwand des Flaschenhalters (5) angeordnet sind.

12. Getränkeerwärmungsvorrichtung nach einem der vorhergehenden Ansprüche, welche **dadurch gekennzeichnet ist, dass** die Vorrichtung ferner eine auf der Basis (3) angeordnete Leiterplatte und eine mit der Leiterplatte verbundene Anzeige umfasst; die Leiterplatte mit der Erwärmungsvorrichtung (6) bzw. dem Antriebsmittel (4) verbunden ist.

## Revendications

1. Un dispositif pour chauffer une boisson, de préférence du lait, comprenant :
un porte-bouteille (5) de structure cylindrique dans lequel une chambre de placement de bouteille est prévu ; et
un dispositif d'entraînement magnétique comprenant une base (3) pourvue d'une partie cylindrique fixe (31), un moyen d'entraînement (4) disposé sur la base ; et un système de transmission magnétique qui comprend un ensemble d'entraînement principal (1) et un ensemble entraîné (2) situé à l'intérieur de l'ensemble d'entraînement principal (1) et concentrique avec celui-ci ;
dans lequel la partie cylindrique (31) comprend un corps principal (311) de structure creuse avec une extrémité fermée (312) située au niveau de la partie inférieure du corps principal (311) pour définir une chambre de chauffage à la vapeur dans laquelle le porte-bouteille (5) est disposé ;
dans lequel l'ensemble d'entraînement principal (1) a une paroi latérale avec une pluralité de premiers organes d'entraînement (11) disposés dessus, l'ensemble entraîné (2) a une paroi latérale avec une pluralité de deuxièmes organes d'entraînement (21) disposés dessus, et les premiers organes d'entraînement et/ou les deuxièmes organes d'entraînement (21) sont des aimants dotés de propriétés magnétiques ;
dans lequel l'ensemble entraîné (2), qui est disposé à l'intérieur de la partie cylindrique fixe (31), est fixé sur le porte-bouteille (5), et l'ensemble d'entraînement principal (1) est disposé à l'extérieur de la partie cylindrique fixe (31) sur le corps principal (311) ; et
par lequel la rotation de l'ensemble d'entraînement principal (1) autour de la paroi extérieure de la partie cylindrique fixe (31) amène l'ensemble entraîné (2) à tourner autour d'un point de pivot central, qui est situé coaxial avec l'ensemble d'entraînement principal (1) et la partie cylindrique fixe (31), par une force produite par l'attraction magnétique ou la répulsion magnétique entre les premiers organes d'entraînement (11) et les deuxièmes organes d'entraînement (21) ;
par lequel l'ensemble d'entraînement principal (1) est entraîné de manière à tourner cycliquement sur le corps principal (311) par le moyen d'entraînement (4) de sorte que, grâce à la coopération de l'ensemble d'entraînement principal (1) et de l'ensemble entraîné (2), le moyen d'entraînement (4) entraîne le porte-bouteille (5) à tourner cycliquement dans la chambre de chauffage à vapeur ; et
le dispositif comprenant en sus un dispositif de chauffage (6) pour chauffer une bouteille reçue dans le porte-bouteille, ledit dispositif de chauffage (6) étant disposé dans la chambre de chauffage à vapeur.

2. Le dispositif selon la revendication 1, **caractérisé en ce que** l'ensemble d'entraînement principal (1) est une structure annulaire dotée d'une pluralité de supports de premiers organes d'entraînement (12) qui reçoivent les premiers organes d'entraînement (11) ; et
dans lequel, de préférence, les supports des premiers organes d'entraînement (12) sont espacés à intervalles égaux sur une face intérieure de la paroi latérale de l'ensemble d'entraînement principal (1).

3. Le dispositif selon la revendication 2, **caractérisé en ce que** le nombre de supports des premiers organes d'entraînement (12) est supérieur ou égal à celui des premiers organes d'entraînement (11), qui est deux ou plus premiers organes d'entraînement (11).

4. Le dispositif selon la revendication 2 ou 3, **caractérisé en ce que** l'ensemble entraîné (2) est une structure circulaire dotée d'une pluralité de supports des deuxièmes organes d'entraînement (22) qui reçoivent les deuxièmes organes d'entraînement (21) ; et
dans lequel, de préférence, les supports des deuxièmes organes d'entraînement (22) sont espacés à intervalles égaux sur une face extérieure de la paroi latérale de l'ensemble entraîné (2).

5. Le dispositif selon la revendication 4, **caractérisé en ce que** le nombre de supports des deuxièmes organes d'entraînement (22) est supérieur ou égal à celui des deuxièmes organes d'entraînement (21), qui est deux ou plus, et de préférence six, deuxièmes organes d'entraînement (21).

6. Le dispositif selon une quelconque des revendications précédentes, **caractérisé en ce que** soit lesdits premiers organes d'entraînement (11) soit lesdits deuxièmes organes d'entraînement comprennent un métal capable de générer un champ magnétique avec un aimant, tel que le fer ou le nickel.

7. Le dispositif à entraînement magnétique selon une quelconque des revendications précédentes, **caractérisé en ce que** le moyen d'entraînement (4) et l'ensemble d'entraînement principal (1) sont reliés par une courroie ou un engrenage ; et
dans lequel, de préférence, le moyen d'entraînement (4) est un moteur.

8. Le dispositif de chauffage de boissons selon une quelconque des revendications précédentes, **caractérisé en ce que** la position de l'ensemble entraîné (2) disposé sur le porte-bouteille correspond à la position de l'ensemble d'entraînement principal (1) disposé sur la partie cylindrique fixe (31).

9. Le dispositif de chauffage de boissons selon une quelconque des revendications précédentes, **caractérisé en ce que** le point de pivot central est prévu comme pivot central (3121) en position centrale de l'extrémité fermée (312) de la partie cylindrique fixe (31) ; le pivot central (3121) étant convexe vers le haut et correspondant au porte-bouteille (5).

10. Le dispositif de chauffage de boissons selon une quelconque des revendications précédentes, **caractérisé en ce que** le dispositif de chauffage (6) est disposé sur l'extrémité fermée (312) de la partie cylindrique fixe (31).

11. Le dispositif de chauffage de boissons selon une quelconque des revendications précédentes, **caractérisé en ce que** le porte-bouteille (5) est doté d'une pluralité d'évents à vapeur (51) ; et
dans lequel, de préférence, les évents à vapeur (51) sont espacés à intervalles égaux sur la paroi latérale du porte-bouteille (5).

12. Le dispositif de chauffage de boissons selon une quelconque des revendications précédentes, **caractérisé en ce qu'**il comprend en sus une carte de circuit disposée sur la base (3) et un affichage couplé à la carte de circuit ; la carte de circuit étant couplée au dispositif de chauffage (6) et au moyen d'entraînement (4) respectivement.
